# EUROPEAN PATENT APPLICATION

(11) **EP 4 693 629 A1**
(43) Date of publication of application: **11.02.2026**
(21) Application number: 25191115.2
(22) Date of filing: 22.07.2025
(51) Int. Cl.: H01M 50/103, H01M 50/107, H01M 50/119, H01M 50/133, H01M 50/143, H01M 50/145, H01M 50/15, H01M 50/152, H01M 50/131, H01M 50/55, H01M 50/553

(54) **SECONDARY BATTERY**

(30) Priority: 06.08.2024 KR 20240104597
(71) Applicant: SAMSUNG SDI CO., LTD., Yongin-si, Gyeonggi-do 17084 (KR)
(72) Inventor: KIM, Hyo Jin, 16678 Suwon-si (KR); EUM, Yul, 16678 Suwon-si (KR); WON, Na Rae, 16678 Suwon-si (KR); CHOI, Yun Seok, 16678 Suwon-si (KR)
(74) Representative: Marks & Clerk LLP

(57) **Abstract**

A secondary battery includes an electrode assembly and a case accommodating the electrode assembly, at least a portion of the case including a first region and a second region different from the first region, the second region having a different pressing force on the electrode assembly than the first region.

## Description

### BACKGROUND

### 1. Field

The present disclosure relates to a secondary battery.

### 2. Description of the Related Art

In general, with the recent rapid spread of electronic devices that use batteries, such as mobile phones, laptop computers, electric vehicles, and the like, the demand for secondary batteries with high energy density and high capacity is rapidly increasing. Accordingly, research and development to improve the performance of lithium secondary batteries is actively being conducted.

A lithium secondary battery is a battery that includes positive and negative electrodes that include an active material capable of intercalation and deintercalation of lithium ions, and an electrolyte, and produces electrical energy through oxidation and reduction reactions when the lithium ions are intercalated/deintercalated to/from the positive and negative electrodes.

The above-described information disclosed in the art that is the background of the present disclosure is merely intended to improve the understanding of the background of the present disclosure, and may therefore include information that does not constitute the related art.

### SUMMARY

According to an aspect of the present disclosure, there is provided a secondary battery, including an electrode assembly, and a case accommodating the electrode assembly, at least a portion of the case including a first region and a second region, the second region having a different pressing force on the electrode assembly than the first region.

The case may have a prismatic shape including a side surface with a pair of long side surfaces and a pair of short side surfaces, and a lower surface, and the portion of the case may include at least one of the pair of long side surfaces.

The first region may include a central portion of the at least one of the pair of long side surfaces, and the second region may be on at least one side of the first region, the second region including an edge portion of the at least one of the pair of long side surfaces.

The pair of long side surfaces may be longer in a height direction than in a width direction.

The secondary battery may further include a cap plate coupled to an opening of the case, the cap plate including a first terminal protruding outward from the case and connected to a first electrode of the electrode assembly, and a second terminal protruding in a same direction as the first terminal and connected to a second electrode of the electrode assembly.

The case may have a cylindrical shape including a lower surface and a side surface extending from the lower surface, the portion of the case including the lower surface.

The first region may include a central portion of the lower surface, and the second region may surround the first region and includes an edge portion of the lower surface.

The second region may include two second sub-regions on opposite sides of the first region, the first region extending in parallel to the two second sub-regions.

The case may have a prismatic shape including a side surface with a pair of long side surfaces and a pair of short side surfaces, the first region extending in a center of the at least one of the pair of long side surfaces along a direction oriented from a bottom of the case toward an opening of the case.

The first region may include a first material, and the second region includes a second material having a lower tensile strength than the first material.

The first region may include a main region including the first material, and a sub-region on at least one side of the main region and including the first material and the second material.

The first region may have a first thickness, and the second region may have a second thickness that is thinner than the first thickness.

The case may have a step between the first region and the second region.

The case may include a first surface with the step and a second surface with the step, the first region being wider on the first surface than on the second surface.

The case may include a first surface with the step and a second surface without the step.

The first surface may be an inner surface of the case.

The case may have a curved surface from the first region toward the second region.

The case may include a first surface with the curved surface and a second surface with the curved surface, the curved surface having a larger curvature on the first surface than on the second surface.

The case may include a first surface with a curve and a second surface without a curve.

The case may include a clad metal including the first region and the second region.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1 is a perspective view schematically showing a prismatic secondary battery according to an embodiment of the present disclosure;
FIG. 2 is a perspective view schematically showing a cylindrical secondary battery according to an embodiment of the present disclosure
FIG. 3 is a perspective view schematically showing a long side surface of the prismatic secondary battery shown in FIG. 1;
FIG. 4 is a diagram schematically showing one surface of the cylindrical secondary battery shown in FIG. 2;
FIG. 5 is a cross-sectional view along line A-A' of FIG. 3 and/or line B-B' of FIG. 4;
FIG. 6 is a cross-sectional view along line A-A' of FIG. 3 and/or line B-B' of FIG. 4;
FIG. 7 is a cross-sectional view along line A-A' of FIG. 3 and/or line B-B' of FIG. 4;
FIG. 8 is a cross-sectional view along line A-A' of FIG. 3 and/or line B-B' of FIG. 4; and
FIG. 9 is a cross-sectional view along line A-A' of FIG. 3 and/or line B-B' of FIG. 4.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Terms or words used in the present specification and the appended claims should not be interpreted as limited to ordinary or dictionary meanings and should be interpreted as meanings and concepts consistent with the technical idea of the present disclosure based on the principle that the inventor can properly define in order to describe his or her embodiments in the best way. Accordingly, it is to be understood that the embodiments described herein, and the configurations shown in the drawings are only some of the most preferred embodiments of the present disclosure and do not represent all of the technical ideas of embodiments, and that there may be various equivalents and modifications that may be included at the time of filing.

Furthermore, when used herein, the words "comprise, include" and/or "comprising, including" specify the presence of the shapes, numbers, steps, actions, members, elements, and/or groups thereof mentioned and are not intended to exclude the presence or addition of one or more other shapes, numbers, actions, members, elements, and/or groups thereof.

The reference that two objects for comparison are 'identical' means 'substantially identical.' Therefore, substantially identical may include deviations that are considered low in the art, for example, deviations of less than 5%. Also, uniformity of a parameter over a given region may imply uniformity from an average perspective.

Throughout the specification, unless otherwise stated, each component may be singular or plural.

When any component is said to be disposed on the "upper surface (or lower surface)" of a component or "on (or under)" a component, this not only means that any component is disposed in contact with the upper (or lower) surface of the component, but also means that other components may be interposed between the component and any component disposed on (or under) the component.

In addition, when a component is described as being "connected," "coupled," or "linked" to another component, the components may be directly connected or linked to each other, but it should be understood that other components may be "interposed" between each component, or that each component may be "connected," "coupled," or "linked" through other components. When a part is said to be "electrically connected" to another part, this includes not only the case where it is directly connected, but also the case where it is connected with another element therebetween.

As used herein, the term "and/or" includes any and all combinations of one or more of the related items listed herein. In addition, the use of the term "may" when describing embodiments of the present disclosure refers to "one or more embodiments of the present disclosure." Expressions such as "one or more" and "at least one" preceding a list of elements modify the list of elements as a whole and do not modify individual elements in the list.

When reference is made to "A and/or B" throughout the specification, it means A, B, or A and B unless otherwise stated to the contrary. In other words, "and/or" includes all or any combination of a plurality of listed components. When it comes to "C to D", it means that it is greater than or equal to C and less than or equal to D unless specifically stated to the contrary.

When a phrase such as "at least one of A, B, and C", "at least one of A, B, or C", "at least one selected from the group of A, B, and C", or "at least one selected from A, B, and C" is used to specify a list of elements A, B, and C, the phrase may refer to any suitable combination.

The term "use" may be considered synonymous with the term "utilize." As used herein, the terms "substantially," "about," and similar terms are used as terms of approximation, not as terms of degree, and are intended to take into account inherent variations in measured or calculated values that would be recognized by a person of ordinary skill in the art.

While terms such as first, second, third, and the like may be used herein to describe various elements, components, regions, layers, and/or sections, such elements, components, regions, layers, and/or sections are not intended to be limited by such terms. The terms are used only to distinguish one element, component, area, layer, or section from another element, component, area, layer, or section. Thus, unless specifically stated to the contrary, a first element, component, region, layer, or section discussed below may be named a second element, component, region, layer, or section, etc. without departing from the teachings of the example embodiments.

To describe the relationship of one element or feature to another element(s) or feature(s) as shown in the drawings, spatially relative terms such as "beneath," "below," "lower," "above," "upper," and the like may be used herein for ease of description. It will be understood that spatially relative positions are intended to encompass different orientations of the device in use or operation in addition to the orientations depicted in the figures. For example, when a device in a drawing is inverted, an element described as "below" or "under" another element is understood to be "on" or "above" the other element. Thus, the term "below" can encompass both up and down directions.

The terms used herein are intended to describe embodiments of the present disclosure and are not intended to limit the present disclosure.

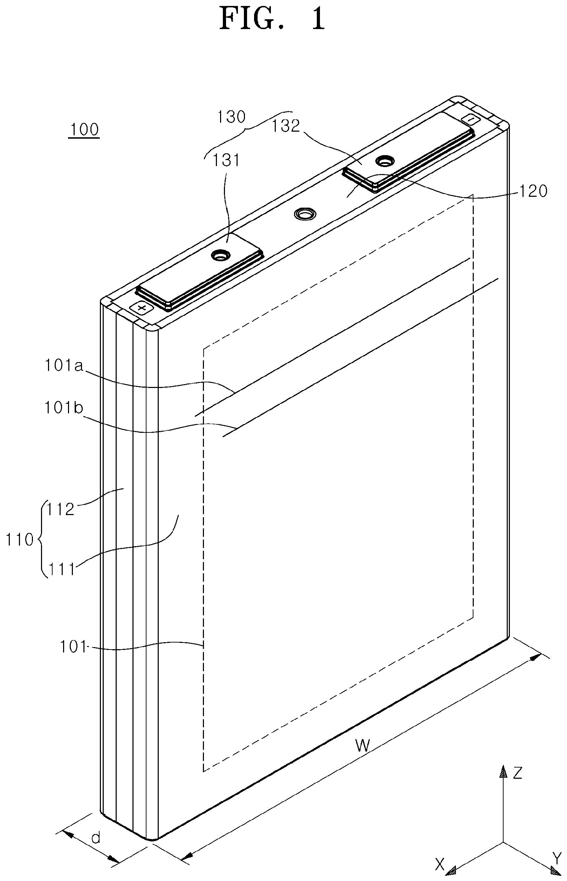

FIG. 1 is a perspective view schematically showing a prismatic secondary battery 100 according to an embodiment of the present disclosure.

In FIG. 1, the x-axis represents the width direction of the secondary battery 100. In FIG. 1, the y-axis represents the length direction of the secondary battery 100. In FIG. 1, the z-axis represents the height direction of the secondary battery 100.

Referring to FIG.1, the secondary battery 100 may include an electrode assembly 101, a case 110, and a cap plate 120. The electrode assembly 101 may be accommodated inside the case 110. For example, the electrode assembly 101 may include a laminated structure formed by laminating electrodes and a separator. For example, the electrode assembly 101 may be formed by winding the laminated structure around a winding axis. For example, the laminated structure may be formed clockwise or counterclockwise around the winding axis to form a jelly roll.

In this case, the electrodes may include, e.g., a first electrode and a second electrode. For example, the first electrode may be a positive electrode and the second electrode may be a negative electrode. In another example, the first electrode may be a negative electrode and the second electrode may be a positive electrode. In this way, the first electrode and the second electrode may have different polarities. The separator may be disposed between the first electrode and the second electrode. For example, the separator may prevent a short circuit from occurring between the first electrode and the second electrode. A detailed description of each of the components of the electrode assembly is as follows.

### Positive electrode active material

As a positive electrode active material, a compound capable of reversible intercalation and deintercalation of lithium (a lithiated intercalation compound) may be used. For example, at least one of composite oxides of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following chemical formulas may be used: LiₐA_{1-b}X_{b}O_{2-c}D'_{c} (0.90 ≤ a ≤ 1.8, 0 ≤ b ≤ 0.5, 0 ≤ c ≤ 0.05); LiₐMn_{2-b}X₃O_{4-c}D'_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D'_{α} (0.90 ≤ a ≤ 1.8, 0 ≤ b ≤ 0.5, 0 ≤ c ≤ 0.5, 0<α<2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0<α<2); LiₐNi_{b}Co_{c}L_{1d}GeO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8).

In the chemical formula above, A is Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G is Al, Cr, Mn, Fe, Mg, La, Ce, Sr, V, or a combination thereof; and L1 may be Mn, Al, or a combination thereof.

As an example, the positive electrode active material may be a high-nickel positive electrode active material in which the content of nickel is 80 mol% or more, 85 mol% or more, 90 mol% or more, 91 mol% or more, or 94 mol% or more, and 99 mol% or less, based on 100 mol% of the metal excluding lithium in the lithium transition metal composite oxide. The high-nickel positive electrode active material may be used to implement high capacity, and thus may be applied to high-capacity, high-density lithium batteries.

### Positive electrode

A positive electrode for a secondary battery 100 may include a current collector and a positive electrode active material layer formed on the current collector. The positive electrode active material layer includes a positive electrode active material and may further include a binder and/or a conductive material. As an example, the positive electrode may further include an additive that may act as a sacrificial positive electrode.

The content of the positive electrode active material may be 90% by weight to 99.5% by weight based on 100% by weight of the positive electrode active material layer, and the content of each of the binder and the conductive material may be 0.5% by weight to 5% by weight based on 100% by weight of the positive electrode active material layer.

The binder serves to adhere the positive electrode active material particles to each other well and also to adhere the positive electrode active material to the current collector well. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but the present disclosure is not limited thereto.

The conductive material is used to impart conductivity to the electrode, and any material may be used as long as it does not cause a chemical change and is electronically conductive in the battery to be configured. Examples of the conductive material may include carbon materials such as natural graphite, artificial graphite, carbon black, acetylene black, Ketjen black, carbon fibers, carbon nanofibers, carbon nanotubes, and the like; metal materials in the form of metal powder or metal fibers containing copper, nickel, aluminum, silver, and the like; conductive polymers such as polyphenylene derivatives and the like; or a mixture thereof.

Aluminium (Al) may be used as the current collector.

### Negative electrode active material

The negative electrode active material includes a material capable of reversible intercalation/deintercalation of lithium ions, lithium metal, an alloy of lithium and a metal, a material capable of doping and de-doping lithium, or a transition metal oxide.

The material capable of reversible intercalation/deintercalation of lithium ions may include a carbon negative electrode active material, e.g., crystalline carbon, amorphous carbon, or a combination thereof. Examples of the crystalline carbon may include graphite such as natural graphite or artificial graphite in an amorphous, plate-like, flaky, spherical, or fibrous form, and examples of the amorphous carbon include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and de-doping lithium, a Si negative electrode active material or a Sn negative electrode active material may be used. The Si negative electrode active material may be silicon, a silicon-carbon composite, SiOₓ (0 < x < 2), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn negative electrode active material may be Sn, SnO₂, a Sn alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the composite may include secondary particles (core) in which silicon primary particles are assembled, and an amorphous carbon coating layer (shell) disposed on the surface of the secondary particle. The amorphous carbon may be disposed between the primary particles of silicon, for example, so that the primary particles of silicon may be coated with amorphous carbon. The secondary particles may be present in a state in which the secondary particles are dispersed in an amorphous carbon matrix.

The silicon-carbon composite may further include crystalline carbon. For example, the silicon-carbon composite may include a core containing crystalline carbon and silicon particles, and an amorphous carbon coating layer disposed on the surface of the core.

The Si negative electrode active material or the Sn negative electrode active material may be used in combination with the carbon negative electrode active material.

### Negative electrode

A negative electrode for the secondary battery 100 includes a current collector and a negative electrode active material layer disposed on the current collector. The negative electrode active material layer includes a negative electrode active material and may further include a binder and/or a conductive material.

For example, the negative electrode active material layer may include 90% by weight to 99% by weight of the negative active material, 0.5% by weight to 5% by weight of the binder, and 0% by weight to 5% by weight of the conductive material.

The binder serves to adhere the negative electrode active material particles to each other well and also to adhere the negative active material to the current collector well. A non-aqueous binder, an aqueous binder, a dry binder, or a combination thereof may be used as the binder.

The non-aqueous binder includes polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or combinations thereof.

The aqueous binder includes styrene-butadiene rubber, (meth)acrylated styrene-butadiene rubber, (meth)acrylonitrile-butadiene rubber, (meth)acrylic rubber, butyl rubber, a fluoroelastomer, polyethyleneoxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol and a combination thereof.

When the aqueous binder is used as the binder for a negative electrode, the aqueous binder may further include a cellulose compound capable of imparting viscosity. As the cellulose compound, one or more of carboxymethyl cellulose, hydroxypropylmethyl cellulose, methyl cellulose, or an alkali metal salt thereof may be used in combination. As the alkali metal, Na, K, or Li may be used.

The dry binder is a polymeric material capable of being fiberized, e.g., polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material may be used as long as it does not cause a chemical change and is electronically conductive in the battery to be configured. Specific examples may include carbon materials such as natural graphite, artificial graphite, carbon black, acetylene black, Ketjen black, carbon fibers, carbon nanofibers, carbon nanotubes, and the like; metal materials in the form of metal powder or metal fibers containing copper, nickel, aluminum, silver, and the like; conductive polymers such as polyphenylene derivatives; or a mixture thereof.

As the negative electrode current collector, any one selected from a copper foil, a nickel foil, a stainless steel foil, a titanium foil, a nickel foam, a copper foam, a polymer substrate coated with a conductive metal, and a combination thereof may be used.

### Separator

Depending on the type of secondary battery 100, a separator may be present between the positive and negative electrodes. For example, polyethylene, polypropylene, polyvinylidene fluoride, or a multilayer film of two or more layers thereof may be used as such a separator. In another example, a mixed multilayer film such as a polyethylene/polypropylene two-layer separator, a polyethylene/polypropylene/polyethylene three-layer separator, a polypropylene/polyethylene/polypropylene three-layer separator, or the like may also be used.

The separator may include a porous substrate and a coating layer disposed on one or both surfaces of the porous substrate and including an organic material, an inorganic material, or a combination thereof.

The porous substrate may be a polymer film formed of any one polymer selected from polyolefins such as polyethylene, polypropylene, and the like, polyesters such as polyethylene terephthalate, polybutylene terephthalate, and the like, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymers, polyphenylene sulfide, polyethylene naphthalate, glass fibers, Teflon, and polytetrafluoroethylene, or a copolymer or mixture of two or more thereof.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present in a state in which the organic and inorganic materials are mixed in one coating layer, or may be present in a form in which a coating layer including the organic material and a coating layer including the inorganic material are stacked.

The case 110 accommodates the electrode assembly 101. The case 110 may accommodate the electrode assembly 101 together with an electrolyte.

### Electrolyte

The electrolyte for the secondary battery 100 may include a non-aqueous organic solvent and a lithium salt.

The non-aqueous organic solvent acts as a medium through which ions involved in the electrochemical reaction of the battery may move. The non-aqueous organic solvent may be a carbonate, ester, ether, ketone, or alcohol solvent, an aprotic solvent, or a combination thereof.

As the carbonate solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like may be used.

As the ester solvent, methyl acetate, ethyl acetate, n-propyl acetate, dimethyl acetate, methyl propionate, ethyl propionate, decanolide, mevalonolactone, valerolactone, caprolactone, and the like may be used.

As the ether solvent, dibutyl ether, tetraglyme, diglyme, dimethoxyethane, 2-methyltetrahydrofuran, 2,5-dimethyltetrahydrofuran, tetrahydrofuran, and the like may be used. Also, cyclohexanone and the like may be used as the ketone solvent. Ethyl alcohol, isopropyl alcohol, and the like may be used as the alcohol solvent, and nitriles such as R-CN (wherein R is a linear, branched, or cyclic hydrocarbon group having 2 to 20 carbon atoms and may include a double bond, an aromatic ring, or an ether group), and the like; amides such as dimethylformamide and the like; dioxolanes such as 1,3-dioxolane 1,4-dioxolane, and the like; sulfolanes, and the like may be used as the aprotic solvent.

The non-aqueous organic solvents may be used alone or in combination of two or more thereof.

Also, when the carbonate solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in an organic solvent and acts as a source of lithium ions within the battery 100, thereby enabling the basic operation of a lithium battery and promoting the movement of lithium ions between the positive and negative electrodes. Representative examples of the lithium salt may include one or more selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ+1SO₂)(C_{y}F_{2y}+1SO₂) (where x and y are integers from 1 to 20), lithium trifluoromethanesulfonate, lithium tetrafluoroethanesulfonate, lithium difluorobis(oxalato)phosphate (LiDFOB), and lithium bis(oxalato)borate (LiBOB).

### Case

The case 110 may form an approximate appearance of the secondary battery 100. For example, the case 110 may include at least any one material selected from steel, stainless steel, aluminum, and an aluminum alloy. Accordingly, the case 110 may protect the electrode assembly 101 from external impacts, and perform a heat dissipation function of dissipating heat accompanying the charge/discharge operation of the electrode assembly 101 to the outside.

The case 110 may include a lower surface and a side surface. The side surface may extend from the lower surface.

The lower surface may form the bottom surface of the case 110. For example, the lower surface may support the bottom of the case 110. The lower surface may be, e.g., formed in a rectangular shape. The lower surface includes a pair of long sides and a pair of short sides. In this example, the long sides are formed longer than the short sides. For example, the length of the long side may be expressed as 'w,' and the length of the short side may be expressed as 'd.' In this case, w is a real number greater than d. Each of the pair of long sides may be, e.g., a side along the width direction x of the secondary battery 100. Each of the pair of short sides may be, e.g., a side along the length direction y of the secondary battery 100.

The side surface may be formed by extending from the lower surface. For example, the side surface may be formed by extending upward from the lower surface in a vertical direction (e.g., in the height direction z). The side surface may be formed in a rectangular shape including a pair of long side surfaces 111 and a pair of short side surfaces 112.

For example, the long side surface 111 may be formed by extending upward from the long side of the lower surface. As shown in FIG. 1, the long side surface 111 may be formed by the long side along the width direction x of the secondary battery 100 and the height along the height direction z of the secondary battery 100. The long side surface 111 may be formed such that the height along the height direction z is longer than the long side along the width direction x.

For example, the short side surface 112 may be formed by extending upward from the short side of the lower surface. The short side surface 112 may be formed by the short side along the length direction y of the secondary battery 100 and the height along the height direction z of the secondary battery 100. The short side surface 112 may be formed so that the height along the height direction z is longer than the length along the length direction y.

The short side surface 112 has both sides connected to a pair of long side surfaces 111. Also, the long side surface 111 has both sides connected to the pair of short side surfaces 112. Through this configuration, the case 110 includes side surfaces formed by the pair of short side surfaces 112 and the pair of long side surfaces 111. In this way, the case 110 may be formed to be relatively long in the height direction z to form a tall cell shape.

The cap plate 120 may be formed while covering an opening of the case 110. For example, the cap plate 120 may be coupled to the upper side of the side surface and is disposed to face the lower surface of the case 110.

For example, referring to FIG. 1, the case 110 may include a lower surface connected to the long side surfaces 111 and the short side surfaces 112. In another example, the case 110 may include an upper surface and a side surface extending from the upper surface. In this case, the cap plate 120 may be coupled to the upper side of the side surface of the case 110, and disposed to face the upper surface of the case 110.

The cap plate 120 may provide a space in which a terminal 130 electrically connected to the electrode assembly 101 may protrude outward. In this case, the terminal 130 may include a first terminal 131 connected to a first electrode 101a and protruding outward from the secondary battery 100, and a second terminal 132 connected to a second electrode 101b and protruding outward. In this case, the first terminal 131 and the second terminal 132 may protrude in the same direction. For example, the first terminal 131 and the second terminal 132 may both be provided on the cap plate 120 and formed to protrude from the upper side of the secondary battery 100.

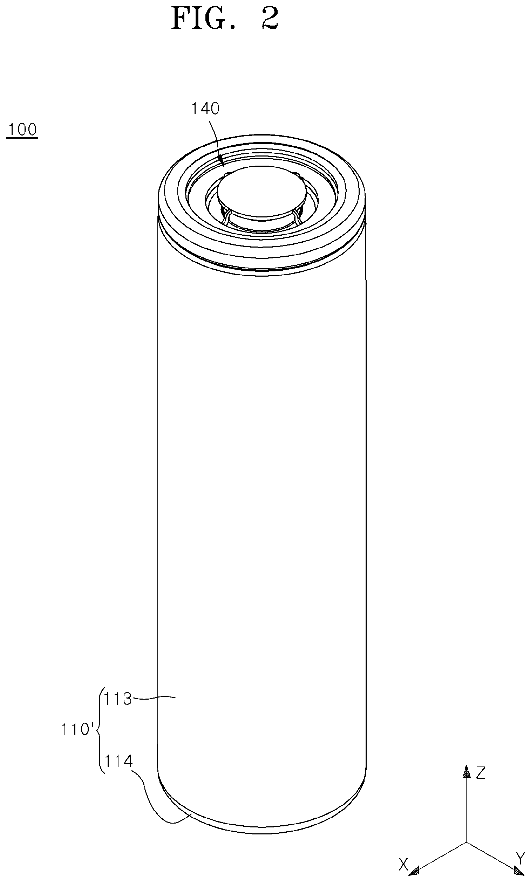

FIG. 2 is a perspective view schematically showing a cylindrical secondary battery 100 according to an embodiment of the present disclosure.

The secondary battery 100 shown in FIG. 2 may include an electrode assembly (not shown), a case 110', and a cap assembly 140. Regarding the cylindrical secondary battery 100, any contents that overlap with that of the prismatic secondary battery 100 may be omitted.

The case 110' may form an approximate appearance of the secondary battery 100. For example, the case 110' may include a cylindrical side surface 113 having a central axis formed in the center thereof. The central axis of the case 110' described below may refer to the central axis of the side surface 113. Both ends of the side surface 113 perpendicular to the central axis of the case 110 may be formed to be open.

The case 110' may further include a lower surface 114 that closes the lower end of the side surface 113. The lower surface 114 may be formed to have an approximately circular shape, and may be disposed to face the lower end of the side surface 113. The lower surface 114 may be disposed perpendicular to the central axis of the case 100'. The circumferential surface of the lower surface 114 may be joined to the lower end of the side surface 113. For example, the lower surface 114 may be formed integrally with the side surface 113 by a drawing process or the like. In another example, the lower surface 114 may be manufactured separately from the side surface 113, and then joined to the side surface 113 by welding or the like.

The case 110' may form an opening by opening the upper end of the side surface 113. The opening provides a path for the electrode assembly to be inserted into the case 110 in the upper region of the case 110. Also, the opening may function as a configuration that provides a space in which the cap assembly 140 may be installed. The opening may refer to an empty space disposed opposite the lower surface 114 and surrounded by the upper end of the side surface 113.

The cap assembly 140 may be coupled to the case 110' and may seal the opening of the case 110'. For example, the cap assembly 140 may be arranged at the upper end, i.e., the opening, of the side surface 113. A beading part concavely formed toward the central axis of the case 110' may be formed on the side surface 113. The beading part may be arranged on the lower side of the cap assembly 140, and may restrict the cap assembly 140 from being inserted into the case 110' by a set distance or more. A crimping part in which the upper end of the side surface 113 is bent toward the central axis of the case 110' may be formed on the upper side of the beading part. The crimping part may be arranged on the upper side of the cap assembly 140, and may prevent the cap assembly 140 from being separated out of the case 110'.

A gasket may be disposed between the case 110' and the cap assembly 140. The gasket may function as a configuration that secures the cap assembly 140 in the opening by its own elastic restoring force, electrically insulates the case 110' and the cap assembly 140 from each other, and blocks moisture or an electrolyte from flowing in or out between the case 110' and the cap assembly 140.

For example, the gasket may include an insulating material such as a rubber, polyethylene (PE), polypropylene (PP), polyethylene terephthalate (PET), and the like. The gasket may be formed to have an approximate ring shape, and may be disposed on the inner side of the beading part and/or the crimping part. The outer surface of the gasket may be in close contact with the inner surface of the beading part and/or the crimping part, and the inner surface of the gasket may be in close contact with the outer surface of the cap assembly 140. The gasket may be arranged on the inner side of the beading part and/or the crimping part.

The cap assembly 140 may be electrically connected to the electrode assembly. For example, the cap assembly 140 may be electrically connected to the first electrode or the second electrode. For example, when the cap assembly 140 is connected to the first electrode, the cap assembly 140 may function as a terminal of the first electrode of the secondary battery 100.

The cap assembly 140 may block the electrical connection between the secondary battery 100 and external devices when the pressure inside the case 110' increases due to overcurrent and the like. For example, the cap assembly 140 may include a vent part. The vent part may include a structure in which a notch is formed. The vent part may be formed so that the notch ruptures when a predetermined pressure is exceeded. For example, when the pressure inside the case 110' rises above the set level, the vent part in the cap assembly 140 may rupture and the space inside and outside of the case 110' may communicate with each other. Accordingly, the cap assembly 140 may reduce the risk of explosion of the secondary battery 100 when an overcurrent occurs.

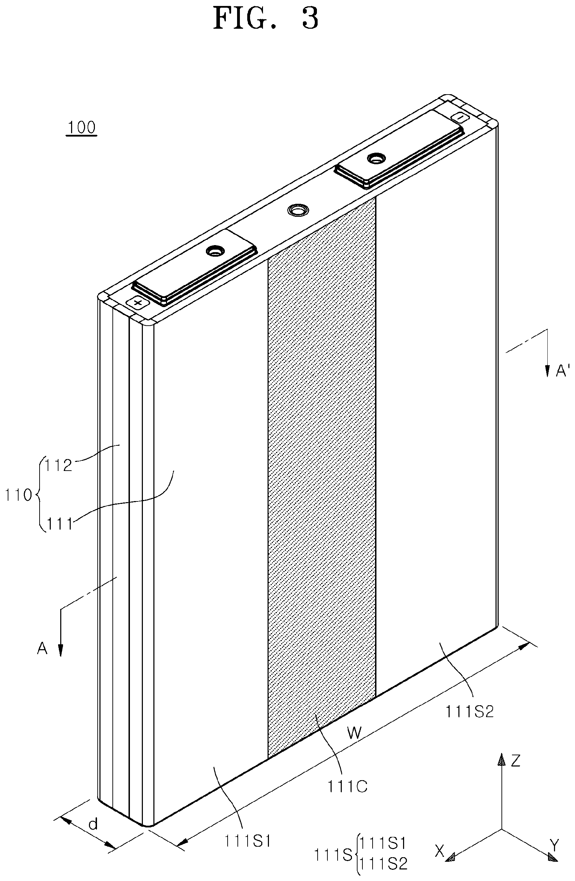

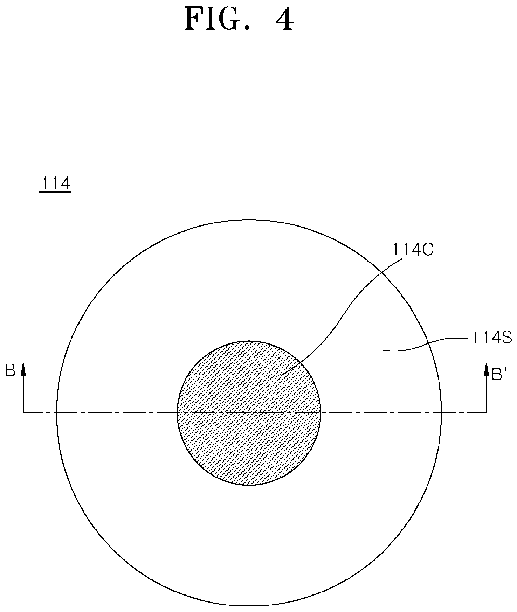

FIG. 3 is a perspective view schematically showing the long side surface 111 of the case 110 of the prismatic secondary battery 100 shown in FIG. 1. FIG. 4 is a plan view schematically showing the lower surface 114 of the case 110' of the cylindrical battery 100 shown in FIG. 2.

Referring to FIG. 3, the secondary battery 100 may include electrode assembly (101, FIG. 1) and case 110 configured to accommodate the electrode assembly 101. At least a portion of the case 110 may include a first region 111C and a second region 111S, such that the second region 111S may have a different pressing force on the electrode assembly 101 than the first region 111C.

For example, as shown in FIG. 1, the secondary battery 100 may be formed to be relatively longer in the height direction z than in each of the width direction x and the length direction y. In another example, as shown in FIG. 2, the secondary battery 100 may be formed to be relatively longer in the height direction z compared to the diameter of the lower surface.

When gas is generated inside the secondary battery 100, the gas moves toward the vent along the height direction z of the case 110 (or case 110') to be released to the outside. In this case, when the secondary battery 100 is formed relatively long in the height direction z, the gas accumulates in the relatively central region along the height direction z. In this case, the region where a large amount of gas accumulates strongly presses the electrode assembly, and the region where a small amount of gas is formed weakly presses the electrode assembly. Accordingly, the electrode assembly receives different pressures from the gas depending on the region. When this situation continues, there is a problem in that the deterioration of the electrode assembly may be accelerated and/or the lifespan of the secondary battery 100 may be reduced.

While the rigidity of the entire case may be potentially strengthened in order to address different pressures applied to the electrode assembly, the force with which the gas presses the electrode assembly varies depending on the amount of gas. Therefore, even when the rigidity of the entire case is strengthened, the gas generated inside the case applies different magnitudes of force to the electrode assembly depending on the region.

In contrast, the secondary battery 100 according to an embodiment of the present disclosure includes the case 110 where the first region 111C and the second region 111S have different pressing forces on the electrode assembly (101, FIG. 1). In this way, the case 110 is formed so that the different pressing forces are applied to the electrode assembly 101 depending on the region. Accordingly, the secondary battery 100 ensures that the sum of the pressure applied by the gas to the electrode assembly 101 and the pressure applied by the case 110 to the electrode assembly 101 is the same or similar for each region. As a result, the secondary battery 100 may ensure that the pressing force may be uniformly applied to the electrode assembly 101 even when gas is generated inside the case 110. This will be described in detail below.

For example, referring to FIG. 3, the case 110 may be formed in a prismatic shape, and may include a pair of the long side surfaces 111 and the pair of the short side surfaces 112. In this way, when the case 110 is formed in a prismatic shape, the gas may form relatively wide flow paths along the long side surfaces 111 of the case 110. In addition, the gas may form flow paths along the central portions of the long side surfaces 111 of the case 110.

Taking this into account, at least a portion of the case 110 may include at least one of the pair of long side surfaces 111. Accordingly, at least one of the pair of long side surfaces 111 may form a different pressing force on the electrode assembly depending on the region.

For example, as shown in FIG. 3, the first region 111C may include a central portion of the long side surface 111. For example, the first region 111C may be formed along the height direction z and may include a central portion of the long side surface 111 (e.g., a central portion in the width direction x). Also, the second region 111S may be disposed on at least one side of the first region 111C (e.g., in the width direction x), and may include an edge portion of the long side surface 111 (e.g., in the width direction x). For example, the first region 111C and the second region 111S may be parallel to each other with respect to the height direction z. In addition, the second region 111S may be formed on one side or both sides of the first region 111C. For example, the second region 111S may include two second regions disposed on one side and the other side of the first region 111C, and the first region 111C may be formed parallel to each of the two second regions 111S while being disposed between the two second regions 111S.

In another example, as shown in FIG. 2, the case 110' may be formed in a cylindrical shape, and may include one surface (e.g., the lower surface 114) and the side surface 113 extending from the one surface. In this case, the one surface may include one of the upper surface and the lower surface of the case 110'. At this time, the one surface may be coupled to the opening of the case 110' and may be formed to face the vent part (e.g., the vent part shown in FIG. 2). In this way, when the case 110' is formed in a cylindrical shape, the gas may form a flow path toward the vent part along the height direction z of the case 110'. Accordingly, the gas may form a flow path along the central axis of the case 110'.

Taking this into account, at least a portion of the case 110' may include one surface. Therefore, e.g., the lower surface 114 of the case 110 may form different pressing forces on the electrode assembly depending on the region.

For example, as shown in FIG. 4, the lower surface 114 may include the first region 114C that includes a central portion of the lower surface 114. For example, the first region 114C may be formed in a circular shape based on the central axis of the lower surface 114. Also, the second region 114S may be formed to surround the first region 114C (e.g., completely surround a perimeter of the first region 114C), and may include an edge portion of the lower surface 114 (e.g., the first region 114C and the second region 114S may be concentric). In another example, an upper surface opposite the lower surface 114 may additionally or alternatively have a structure similar to that of the lower surface 114.

In this way, the secondary battery 100 according to an embodiment of the present disclosure has the rigidity set differently for each region of the case 110, e.g., via a different structure provided via different materials and/or different thicknesses. As a result, the secondary battery 100 may ensure that the pressure is uniformly applied to the electrode assembly even when gas is generated inside the case 110.

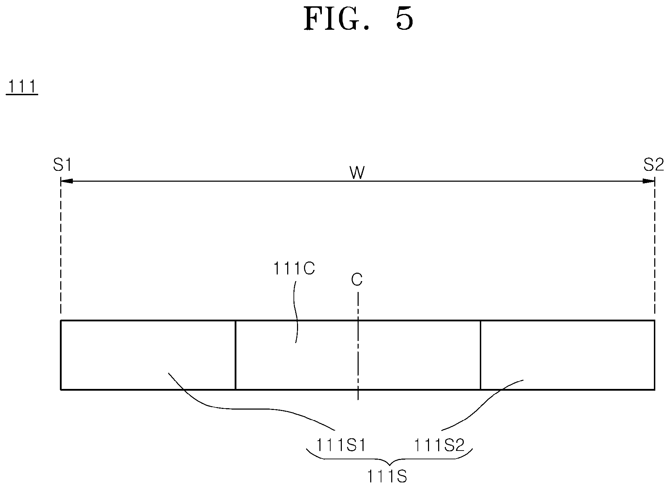

FIG. 5 is a cross-sectional view taken along line A-A' of FIG. 3 and/or line B-B' of FIG. 4.

FIG. 5 shows a cross-sectional view of the long side surface 111 taken along line A-A' of FIG. 3. However, the contents shown in FIG. 5 may be applied identically or similarly to the cross-sectional view of the lower surface 114 taken along line B-B' of FIG. 4.

In FIG. 5, C represents the center line of the long side surface 111 (e.g., C extends along the height direction z in the center of the long side surface 111 in the width direction x). Also, S1 represents one side of the long side surface 111. In addition, S2 represents the other side of the long side surface 111 (e.g., S1 and S2 may be first and second sides of the long side surface 111 that are opposite each other in the width direction x).

As shown in FIGS. 3 and 4, the case 110 (or case 110') includes a first region and a second region. For example, the long side surface 111 includes the first region 111C and the second region 111S. In this case, the volume occupied by the first region 111C in the long side surface 111 may be 40% or more and 80% or less of the long side surface 111 (e.g., the volume of the first region 111C refers to the shaded area of the first region 111C in FIG. 3 multiplied by the length d of the case 110 in the length direction y). Also, the volume occupied by the second region 111S in the long side surface 111 may be 20% or more and 60% or less of the long side surface 111 (e.g., the volume of the second region 111S refers to the total non-shaded area of the second region 111S in FIG. 3 multiplied by the length d of the case 110 in the length direction y).

Also, for example, when viewed in the cross section of FIG. 5, the area occupied by the first region 111C in the long side surface 111 may be 40% or more and 80% or less of the long side surface 111. In addition, for example, when viewed in the cross section of FIG. 5, the area occupied by the second region 111S in the long side surface 111 may be 20% or more and 60% or less of the long side surface 111.

For example, when the area and/or volume occupied by the first region 111C in the long side surface 111 are (is) more than 80%, the long side surface 111 may have strong rigidity as a whole. In this case, the long side surface 111 may not uniformly pressurize the electrode assembly when gas is generated inside the case 110. Therefore, it is preferable that the area and/or volume occupied by the first region 111C in the long side surface 111 are (is) 80% or less. Also, for example, when the area and/or volume occupied by the first region 111C in the long side surface 111 are (is) less than 40%, the long side surface 111 may not provide an appropriate level of rigidity corresponding to the gas flow path. In this case, the long side surface 111 may also not uniformly pressurize the electrode assembly when gas is generated inside the case 110. Therefore, it is preferable that the area and/or volume occupied by the first region 111C in the long side surface 111 are (is) 40% or more.

As described above, the second region 111S may be formed on both sides (e.g., on opposite sides) of the first region 111C. For example, referring to FIG. 3, the second region 111S may include a one-side region 111S1 disposed on one side of the first region 111C and an other-side region 111S2 disposed on the other side of the first region 111C.

For example, the one-side region 111S1 and the other-side region 111S2 in the long side surface 111 may be formed with the same volume. In other words, the one-side region 111S1 and the other-side region 111S2 in the cross section of FIG. 5 may be formed with the same area. For example, the one-side region 111S1, the first region 111C, and the other-side region 111S2 may be formed with volumes and/or area percentages of 10%, 80%, and 10%, respectively. In another example, the one-side region 111S1, the first region 111C, and the other-side region 111S2 may be formed with volumes and/or area percentages of 20%, 60%, and 20%, respectively. In yet another example, the one-side region 111S1, the first region 111C, and the other-side region 111S2 may be formed with volumes and/or area percentages of 25%, 50% and 25%, respectively.

In this way, the second region 111S may be formed to have the same rigidity on one side and the other side centered on the first region 111C. As a result, when gas is generated inside the case 110, the secondary battery 100 may allow the case 110 to uniformly pressurize the electrode assembly.

Hereinafter, various embodiments of how to vary the rigidity by region of the case 110 are described.

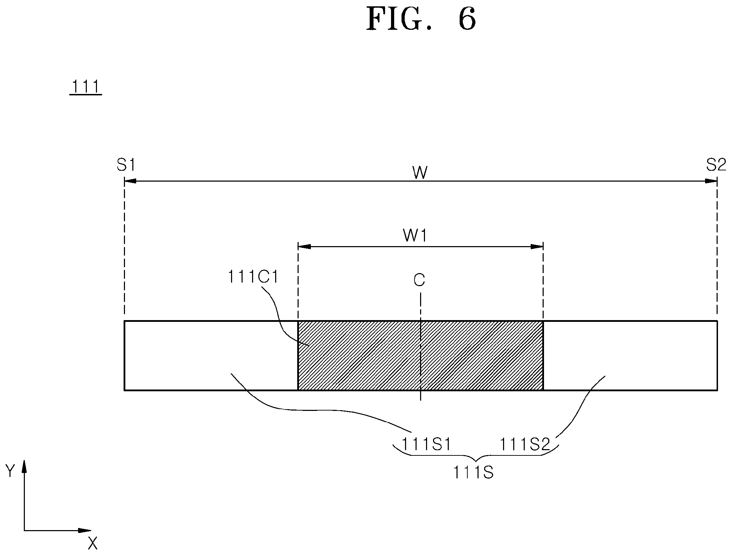

FIG. 6 is a cross-sectional view taken along line A-A' of FIG. 3 and/or line B-B' of FIG. 4.

FIG. 6 shows a cross-sectional view of the long side surface 111 along line A-A' of FIG. 3. However, the FIG. 6 may be applied identically or similarly to the cross-sectional view of the one surface (e.g., 114) along line B-B' of FIG. 4.

As shown in FIGS. 3 to 5, the case 110 includes the first region 111C and the second region 111S. For example, the long side surface 111 includes the first region 111C and the second region 111S.

For example, referring to FIG. 6, the first region 111C1 may include a first material (e.g., only the first material), and the second region 111S may include a second material (e.g., only the second material) having lower tensile strength than the first material. For example, referring to FIG. 6, the first region 111C1 may have a width W1 that is 40% or more and 80% or less of the total width W of the long side surface 111 in the width direction x.

For example, the first material may include an aluminum alloy (e.g., Al5051, Al5052, Al5053, Al6061, Al6062, Al6063, Al7075, etc.), steel use stainless (SUS), and the like, as long as is has a higher tensile strength than the second material. However, the materials included in the first material may be varied and may include all kinds of metals having higher tensile strength than the second material.

For example, the second material may include an aluminum alloy (e.g., Al5051, Al5052, Al5053, Al6061, Al6062, Al6063, Al7075, etc.) steel use stainless (SUS), and the like, as long as is has a lower tensile strength than the first material. However, the materials included in the second material may be varies and may include other materials having a lower tensile strength than the first material.

For example, the first region 111C1 and the second region 111S may form the long side surface 111 while forming a clad metal with each other. In another example, the first region 111C1 and the second region 111S may be joined through laser welding, ultrasonic welding, electromagnetic pulse welding, or the like to form the long side surface 111.

In this way, the case 110 may include the first region 111C and the second region 111S, which include materials having different tensile strengths, and thus may uniformly pressurize the electrode assembly.

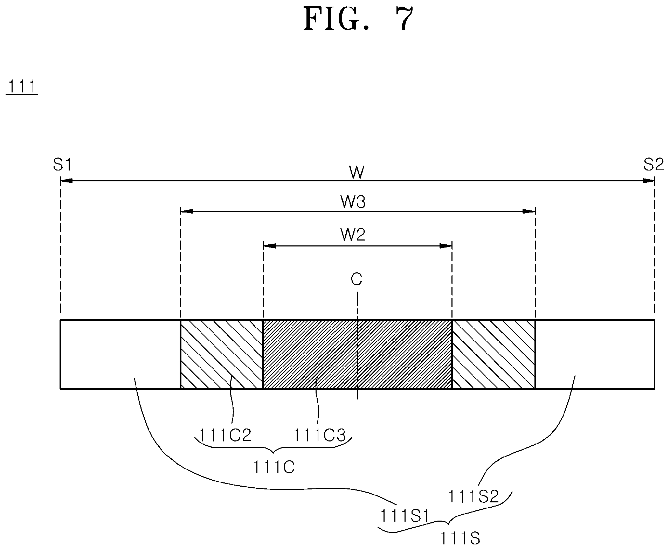

FIG. 7 is a cross-sectional view taken along line A-A' of FIG. 3 and/or line B-B' of FIG. 4.

FIG. 7 shows a cross-sectional view of the long side surface 111 along line A-A' of FIG. 3. However, FIG. 7 may be applied identically or similarly to the cross-sectional view of the one surface (e.g., 114) along line B-B' of FIG. 4.

As shown in FIGS. 3 to 7, the case 110 includes the first region 111C and the second region 111S. For example, the long side surface 111 includes the first region 111C and the second region 111S.

For example, referring to FIG. 6, the case 110 may include the first region 111C and the second region 111S, which include materials having different tensile strengths. In addition, referring to FIG. 7, the case 110 may further include a buffer region in the first region 111C with respect to the second region 111S. Accordingly, for example, the long side surface 111 may be formed such that the tensile strength gradually decreases from the first region 111C toward the second region 111S.

For example, the first region 111C may include a main region 111C3 including a first material, and a sub-region 111C2 formed on at least one side of the main region 111C3 and including a first material and a second material. For example, referring to FIGS. 6 and 7, the main region 111C3 in FIG. 7 may have a width W2 smaller than the width W1 of the first region 111C1 in FIG. 6 (e.g., in the width direction x), and the width W1 of the first region 111C1 in FIG. 6 may be smaller than a width W3 of the total width of the first region 111C in FIG. 7 (i.e., a combined width of the main region 111C3 and the sub-region 111C2).

As described above, the gas formed inside the case 110 forms a flow path along the height direction of the case 110. For example, the gas forms a flow path along the central portion of the long side surface 111 in the height direction of the secondary battery 100. At this time, the flow path formed by the gas is not clearly formed to correspond to the first region 111C, and a small portion of the flow path may be formed to correspond to the second region 111S.

Considering a portion of the gas flow path in this way, the first region 111C may include a region that serves as a buffer. For example, the first region 111C includes the sub-region 111C2. The sub-region 111C2 serves as a buffer between the main region 111C3 and the second region 111S for the main region 111C3.

At this time, the sub-region 111C2 may be formed between the main region 111C3 and the second region 111S. Accordingly, when the second region 111S includes the one-side region 111S1 and the other-side region 111S2, the sub-region 111C2 may be formed between the one-side region 111S1 and the main region 111C3, and between the other-side region 111S2 and the main region 111C3, respectively.

In this way, the case 110 may include the first region 111C and the second region 111S, which include materials having different tensile strengths, and thus may uniformly pressurize the electrode assembly.

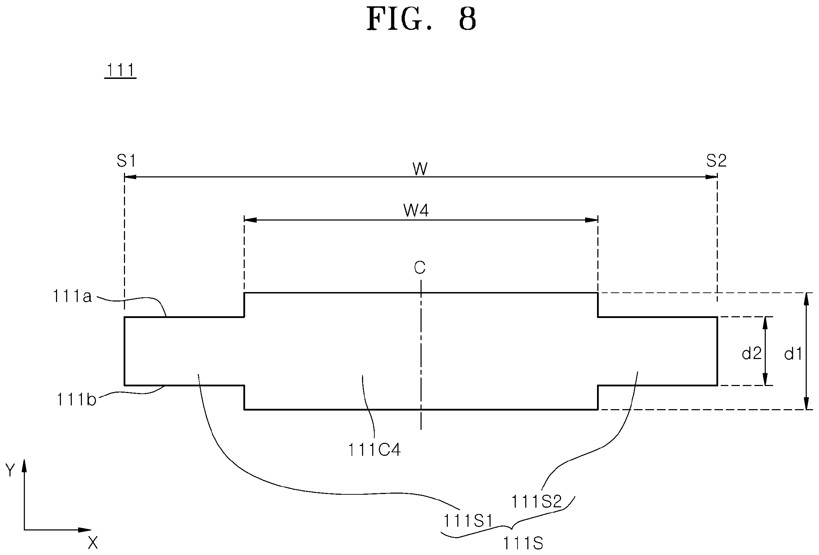

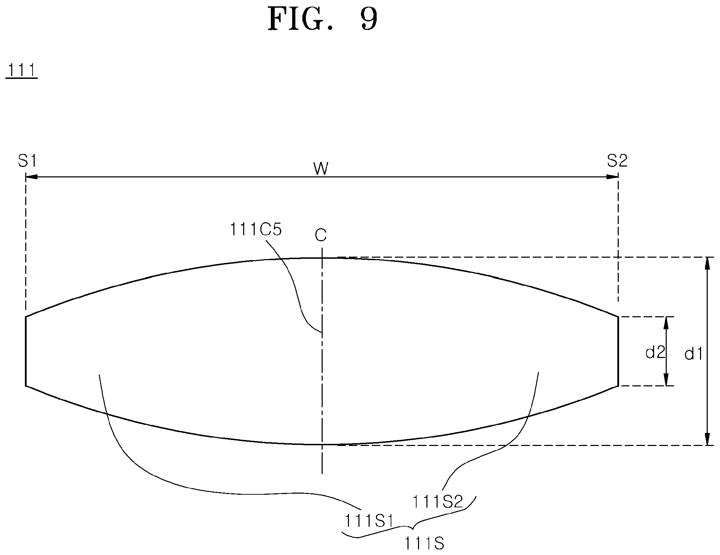

FIG. 8 is a cross-sectional view taken along line A-A' of FIG. 3 and/or line B-B' of FIG. 4. FIG. 9 is a cross-sectional view taken along line A-A' of FIG. 3 and/or line B-B' of FIG. 4.

FIGS. 8 and 9 show cross-sectional views of the long side surface 111 along line A-A' of FIG. 3. However, FIGS. 8 and 9 may be applied identically or similarly to the cross-sectional view of the one surface (e.g., 114) along line B-B' of FIG. 4.

As shown in FIGS. 3 to 7, the case 110 includes the first region 111C and the second region 111S. For example, the long side surface 111 includes the first region 111C and the second region 111S.

Referring to FIGS. 8 and 9, the first region (e.g., 111C4, 111C5) may be formed with a first thickness d1, and the second region 111S may be formed with a second thickness d2 that is thinner than the first thickness d1 (e.g., in the length direction y). It is noted that the first and second thicknesses d1 and d2 refer to a thickness of one long side surface 111 of the case 110 (i.e., one sidewall of the case 110) as measured between facing sides 111a and 111b of a same one long side surface 111.

The long side surface 111 may include the first region 111C and the second region 111S having different pressing forces on the electrode assembly. As a result, the long side surface 111 may allow the first region 111C and the second region 111S to uniformly pressurize the electrode assembly when gas is generated inside the case 110.

For this purpose, for example, the long side surface 111 may include the first region 111C and the second region 111S having different thicknesses. For example, referring to FIG. 8, the first region 111C4 may be formed with the first thickness d1. Also, the second region 111S may be formed with the second thickness d2 that is thinner than the first thickness d1. In this way, the case 110 may be formed so that the first region 111C4 is thicker than the second region 111S, thereby making the rigidity of the first region 111C4 greater than the rigidity of the second region 111S. In this case, the rigidity includes, e.g., tensile strength.

For example, as shown in FIG. 8, the case 110 may have a step formed between the first region 111C4 and the second region 111S. Accordingly, the case 110 may be formed in a step shape.

For example, the case 110 may include one surface formed with a step and the other surface formed with a step. In this case, as shown in FIG. 8, one surface and the other surface of the case 110 may be formed to be symmetrical to each other. Accordingly, the first region on one surface of the case 110 and the first region on the other surface of the case 110 may be formed to have the same size and/or may be disposed at the same position.

In another example, one surface and the other surface of the case 110 may be formed to be asymmetrical to each other. For example, the one surface may be formed to have a first area wider than the other surface. For example, the one surface may be the inner surface of the case 110, and the other surface may be the outer surface of the case 110.

In yet another example, the case 110 may include one surface formed with a flat plane (e.g., coplanar with the second region 111S) and the other surface formed with a step (e.g., a step relative to the second region 111S). For example, the case 110 may have a flat plane formed on one surface and a step formed on the other surface. In this case, the one surface (with the flat surface) may be the inner surface of the case 110, and the other surface may be the outer surface of the case 110.

In this way, the secondary battery 100 may allow the case 110 to uniformly pressurize the electrode assembly when gas is generated inside the case 110.

In another example, as shown in FIG. 9, the case 110 may have a curved surface formed from the first region 111C5 toward the second region 111S. Accordingly, the case 110 may be formed to have a gently (e.g., gradually) curved surface while having a relatively thick central portion C and thin edge portions S1, S2. As a result, the secondary battery 100 may allow the case 110 to uniformly pressurize the electrode assembly when gas is generated inside the case 110.

For example, the case 110 may include one surface formed with a curved surface and the other surface formed with a curved surface. In this case, as shown in FIG. 9, the one surface and the other surface of the case 110 may be formed to be symmetrical to each other.

In another example, one surface and the other surface of the case 110 may be formed to be asymmetrical to each other. For example, the one surface of the case 110 may be formed more gently than the other surface (e.g., the surfaces may have different curvatures). For example, the one surface may be the inner surface of the case 110, and the other surface may be the outer surface of the case 110.

In yet another example, the case 110 may include one surface formed with a flat plane (e.g., coplanar with the second region 111S) and the other surface formed with a curved surface. For example, the case 110 may have one surface formed with a plane and the other surface formed with a curved surface. In this case, the one surface may be the inner surface of the case 110, and the other surface may be the outer surface of the case 110.

For example, the case 110 may include the first region 111C formed with a relatively thick first thickness d1 and including a first material, and the second region 111S formed with a relatively thin second thickness d2 and including a second material. Through this configuration, the secondary battery 100 may further reinforce the rigidity of the case 110, and may also allow the case 110 to more uniformly pressurize the electrode assembly when gas is generated inside the case 110.

However, the case 110 may be formed so that the first region 111C and the second region 111S include the same material but have different thicknesses. Through this configuration, the secondary battery 100 may improve the manufacturing efficiency of the case 110 while allowing the case 110 to uniformly apply pressure to the electrode assembly when gas is generated inside the case 110.

By way of summation and review, embodiments are directed to providing a secondary battery in which an electrode assembly is pressurized uniformly when the gas is generated inside the secondary battery, thereby providing improved lifespan characteristics. The present disclosure relates to a secondary battery that prevents corrosion of a cap plate.

However, the effects that can be achieved through the present disclosure are not limited to the effect described above, and other technical effects not mentioned herein will be clearly understood by those skilled in the art from the description of the disclosure described above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly; and
a case accommodating the electrode assembly, at least a portion of the case including a first region and a second region, the second region configured to have a different pressing force on the electrode assembly than the first region.

2. The secondary battery as claimed in claim 1, wherein:
the case has a prismatic shape including a side surface with a pair of long side surfaces and a pair of short side surfaces, and a lower surface;
the first region includes a central portion of the at least one of the pair of long side surfaces; and
the second region is on at least one side of the first region, the second region including an edge portion of the at least one of the pair of long side surfaces.

3. The secondary battery as claimed in claim 1 or 2, further comprising a cap plate coupled to an opening of the case, the cap plate including:
a first terminal protruding outward from the case and connected to a first electrode of the electrode assembly; and
a second terminal protruding in a same direction as the first terminal and connected to a second electrode of the electrode assembly.

4. The secondary battery as claimed in claim 1, wherein the case has a cylindrical shape including a lower surface and a side surface extending from the lower surface, the portion of the case including the lower surface,
the first region includes a central portion of the lower surface, and
the second region surrounds the first region and includes an edge portion of the lower surface.

5. The secondary battery as claimed in any preceding claim, wherein the second region includes two second sub-regions on opposite sides of the first region, the first region extending in parallel to the two second sub-regions.

6. The secondary battery as claimed in any preceding claim, wherein the first region includes a first material, and the second region includes a second material having a lower tensile strength than the first material.

7. The secondary battery as claimed in claim 6, wherein the first region includes:
a main region including the first material; and
a sub-region on at least one side of the main region and including the first material and the second material.

8. The secondary battery as claimed in any preceding claim, wherein the first region has a first thickness, and the second region has a second thickness that is thinner than the first thickness.

9. The secondary battery as claimed in claim 8, wherein the case has a step between the first region and the second region.

10. The secondary battery as claimed in claim 9, wherein the case includes a first surface with the step and a second surface with the step, the first region being wider on the first surface than on the second surface.

11. The secondary battery as claimed in claim 9, wherein the case includes a first surface with the step and a second surface without the step.

12. The secondary battery as claimed in claim 10 or 11, wherein the first surface is an inner surface of the case.

13. The secondary battery as claimed in claim 8, wherein the case has a curved surface from the first region toward the second region.

14. The secondary battery as claimed in claim 13, wherein the case includes a first surface with the curved surface and a second surface with the curved surface, the curved surface having a larger curvature on the first surface than on the second surface.

15. The secondary battery as claimed in any preceding claim, wherein the case includes a clad metal including the first region and the second region.
